Europäisches Patentamt

European Patent Office

Office européen des brevets

(19)

(11) **EP 0 802 468 B1**

(12) **EUROPÄISCHE PATENTSCHRIFT**

(45) Veröffentlichungstag und Bekanntmachung des Hinweises auf die Patenterteilung:
**15.07.1998  Patentblatt 1998/29**

(51) Int Cl.[6]: **G05D 1/03**, B60R 16/02

(21) Anmeldenummer: **97102189.4**

(22) Anmeldetag: **12.02.1997**

(54) **Anordnung zur optischen Erfassung des Fahrbahnverlaufs**

OPTICAL DETECTION DEVICE OF THE DEVELOPMENT OF THE ROAD

DISPOSITIF DE DETECTION OPTIQUE DU DEROULEMENT DE LA CHAUSSEE

(84) Benannte Vertragsstaaten:
**DE FR GB IT SE**

(30) Priorität: **18.04.1996  DE 19615240**

(43) Veröffentlichungstag der Anmeldung:
**22.10.1997  Patentblatt 1997/43**

(73) Patentinhaber: **DAIMLER-BENZ AKTIENGESELLSCHAFT**
**70567 Stuttgart (DE)**

(72) Erfinder:
- **Hahn, Stefan**
  **73770 Denkendorf (DE)**
- **Stein, Fridtjof, Dr.**
  **73760 Ostfildern (DE)**

(56) Entgegenhaltungen:
**EP-A- 0 361 914**          **EP-A- 0 527 665**

## Beschreibung

Die Erfindung betrifft eine Einrichtung zur optischen Erfassung des Fahrbahnverlaufs und des Verkehrsgeschehens vor einem Straßenfahrzeug durch elektronische Verarbeitung und Auswertung der Bildsignale einer Videokamera, die in einem hochgelegenen Teil des Fahrzeuges angeordnet ist, z.B. in Höhe des oberen Randes der Frontscheibe des Fahrzeuges, wobei der Neigungswinkel ε, den die optische Achse des Kamera-Objektivs mit der Ebene der Fahrbahn einschließt, kleiner als die Hälfte des Gesamtöffnungswinkels (2Θ) des Objektivs ist, jedoch annähernd dessen halbem Wert (Θ) entspricht.

Eine derartige Anordnung ist durch die europäische Patentanmeldung 89 309 876.4 (Publikations-Nr. 0 361 914 A2) bekannt.

Die bekannte Anordnung arbeitet nach dem Prinzip, aus einer Erkennung abschnittsweise geradliniger Linien in dem von der Videokamera entworfenen Bild des erfaßten Gegenstandsraumes den Verlauf der Fahrbahnränder zu ermitteln, die mit zunehmendem Abstand vom Fahrzeug mehr und mehr konvergieren. Anordnungen dieser Art, die eine rasche "Echtzeit"-Bildverarbeitung ermöglichen, werden z.B. als "Einschlafwarner" eingesetzt, der bei einer Abweichung der Soll-Orientierung des Fahrzeuges bezüglich des Fahrbahnverlaufes die Auslösung eines Warnsignals für den Fahrer steuert, prinzipiell auch einen Eingriff in die Servolenkung des Fahrzeuges ermöglicht, um dieses, falls der Fahrer nicht reagiert, in einer dem Fahrbahnverlauf entsprechenden Orientierung und Anordnung auf der Fahrbahn zu halten und gegebenenfalls ein selbsttätiges Abbremsen und Anhalten des Fahrzeuges zu steuern.

Diese Funktionen können umso besser erfüllt werden, je kleiner, gesehen in Fahrbahn-Längsrichtung, der Abstand vom Fahrzeug ist, ab welchem die Fahrbahn "gesehen" - erfaßt - werden kann und je länger die Strecke ist, auf der die Fahrbahn mit hinreichender Ortsauflösung erkennbar ist. Diese gegenläufigen Forderungen können im Sinne eines bestmöglichen Kompromisses durch Verwendung einer Kamera mit einem Objektiv mittleren Bildwinkels, der etwas kleiner ist als derjenige eines Normalobjektivs, einigermaßen, jedoch keineswegs befriedigend erfüllt werden, sehr viel besser, jedoch um den Preis erheblichen Mehraufwandes, durch zwei Videokameras, deren eine dem Nahbereich vor dem Fahrzeug zugeordnet und mit einem Weitwinkelobjektiv bestückt ist und deren andere dem Fernbereich zugeordnet ist und mit einem Teleobjektiv bestückt ist.

Aufgabe der Erfindung ist es daher, eine Anordnung der eingangs genannten Art dahingehend zu verbessern, daß mit einer einzigen Videokamera sowohl im extremen Nahbereich des Fahrzeuges als auch für relativ weit entfernte Bereiche der Fahrbahn ein für die Bildauswertung hinreichend hohes Ortsauflösungsvermögen erzielbar ist.

Diese Aufgabe wird erfindungsgemäß dadurch gelöst, daß das Objektiv der Videokamera als Weitwinkelobjektiv ausgebildet ist, dessen Öffnungswinkel (2Θ) mindestens 90° beträgt, und daß die lichtempfindliche Sensorfläche der Videokamera auf denjenigen Teil des Bildbereiches beschränkt ist, dem im Gegenstandsraum der Abstandsbereich ab einer Mindestentfernung von der Kamera bis zu den weitest entfernten Bereichen des Gegenstandsraumes entspricht.

Bei der erfindungsgemäßen Anordnung ist der Abbildungsmaßstab für vom Fahrzeug weit entfernte Bereiche im Sinne einer unteren Abschätzung um einen Faktor M, der durch die Beziehung

$$M \simeq 1 + \tan^2 \varepsilon$$

gegeben ist, in der mit ε der Neigungswinkel der optischen Achse des Kameraobjektivs bezüglich der Fahrbahn bezeichnet ist, größer als für fahrzeugnahe Bereiche, so daß das Kameraobjektiv für vom Fahrzeug weit entfernte Bereiche des Gegenstandsraumes die Abbildungseigenschaften eines Teleobjektivs und nur für den fahrzeugnahen Bereich die blickfelderweiternden Eigenschaften eines Weitwinkelobjektivs entfaltet.

Dadurch, daß der Öffnungswinkel des Objektivs mindestens 90° beträgt, so daß das Objektiv mit einer Neigung seiner optischen Achse von 45° oder mehr gegen die Fahrbahn angestellt werden kann, wird der Abbildungsmaßstab M für die weit entfernten Fahrbahnbereiche um den Faktor 2 größer als im Nahbereich. Wegen der quadratischen Abhängigkeit des Abbildungsmaßstabes vom Tangens des Neigungswinkels ε ist die Vergrößerung des Abbildungsmaßstabes besonders effizient, wenn dieser Winkel noch größer gewählt werden kann als 45°, was mit noch nicht allzu extremen Weitwinkelobjektiven durchaus möglich ist. Die Verwendung eines Kameraobjektivs mit dem Öffnungswinkel von 45° ermöglicht bei Nutzfahrzeugen mit hohem Fahrerhaus, bei denen das vordere Fahrzeugende im wesentlichen durch die vertikale oder annähernd vertikale Verlaufsebene der Frontscheibe markiert ist, eine Anordnung der Kamera im Innenraum des Führerhauses und trotzdem die Erfassung der Fahrbahn auf fast deren gesamter Länge zwischen dem Fahrzeug und dem Horizont. Durch die Beschränkung der lichtempfindlichen Sensorfläche der Videokamera auf denjenigen Teil des Bildbereiches, dem im Gegenstandsraum ein Abstandsbereich ab einer Mindestentfernung von der Kamera bis zu den weit entfernten Bereichen des Gegenstandsraumes entspricht, kann das begrenzte Bild-Auflösungsvermögen der lichtempfindlichen Sensorfläche einer CCD-Kamera bestmöglich für den interessierenden Überwachungsbereich ausgenutzt werden.

In Kombination hiermit ist es zweckmäßig, wenn die horizontale Mindestentfernung vom Kameraobjektiv, ab welcher dieses das Bild des Gegenstandsraumes auf der lichtempfindlichen Fläche der Kamera entwirft, einem Wert entspricht, der gleich oder annähernd gleich dem Wert h/tanε ist, wobei mit h der vertikale Abstand des Zentrums des Objektivs von der Fahrbahn bezeichnet ist und mit ε wiederum der Neigungswinkel, den die optische Achse des Objektivs mit der Fahrbahn einschließt.

Weitere Einzelheiten der erfindungsgemäßen Anordnung ergeben sich aus der nachfolgenden Beschreibung eines speziellen Ausführungsbeispiels, einschließlich zweckmäßiger Gestaltungsvarianten desselben anhand der Zeichnung. Es zeigen

Fig. 1        eine erfindungsgemäße Anordnung zur optischen Erfassung des Fahrbahnverlaufs und des Verkehrsgeschehens vor einem Straßenfahrzeug mit einer in Höhe des oberen Randes der Frontscheibe des Fahrzeuges angeordneten Videokamera, in schematisch vereinfachter Seitenansicht;

Fig. 2        die Anordnuna gemäß Fig. 1 in schematisch vereinfachter Draufsicht;

Fig. 3        einen Abbildungs-Strahlengang zur Erläuterung der Funktion der Videokamera der Anordnung gemäß den Fig. 1 und 2;

Fig. 4        eine schematisch vereinfachte Darstellung der Anordnung der lichtempfindlichen Sensorflächen der Videokamera der Anordnung gemäß den Fig. 1 und 2,

Fig. 5        eine Ansicht der lichtempfindlichen Sensorfläche der Videokamera der Anordnung, gesehen in Richtung des Pfeils V der Fig. 4 und

Fig. 6a und b    schematisch vereinfachte Bilddarstellungen zur Erläuterung der Funktion der Anordnung gemäß den Fig. 1 und 3.

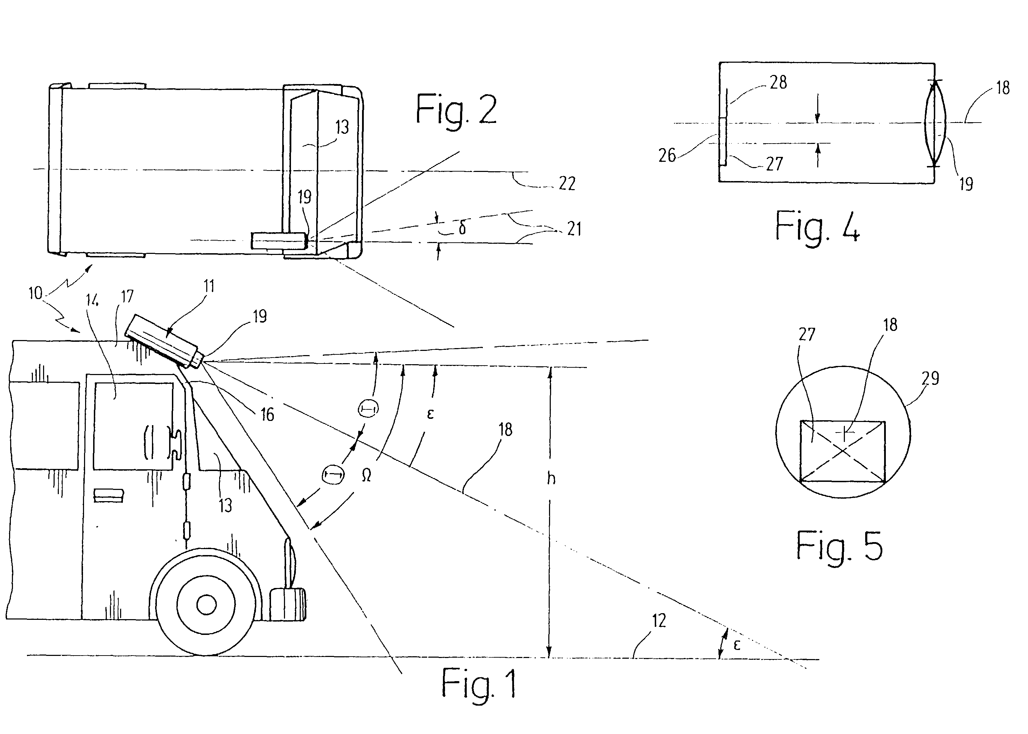

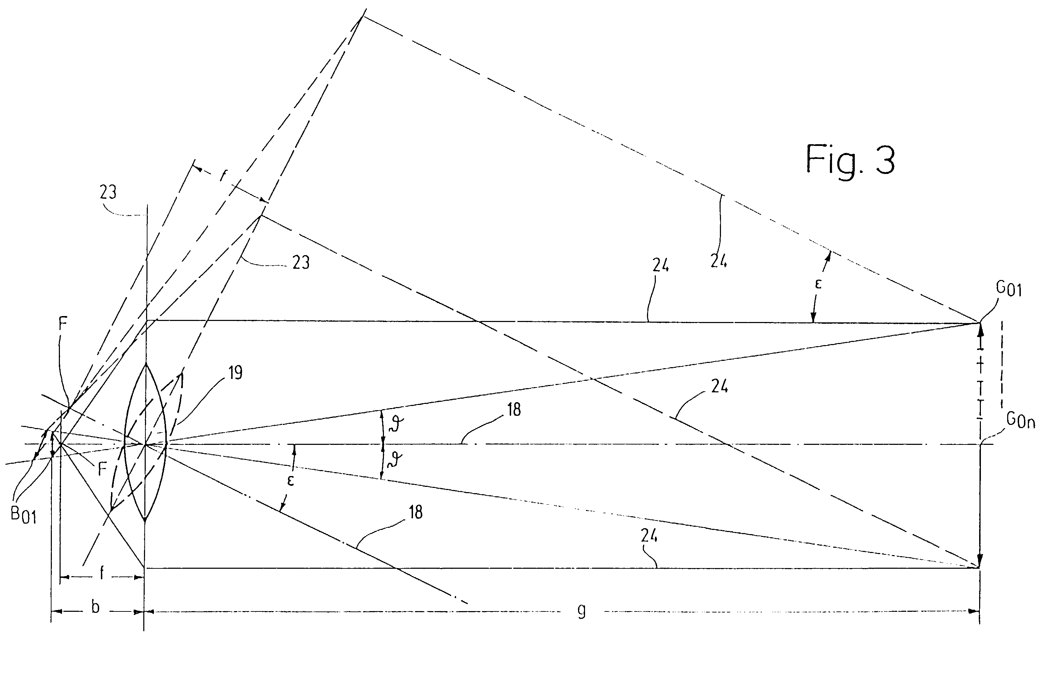

Das in der Fig. 1 insgesamt mit 10 bezeichnete, als Kleintransporter dargestellte Straßenfahrzeug ist mit einer in der Fig. 1 lediglich schematisch dargestellten Videokamera 11 ausgerüstet, innerhalb deren Bildwinkels $\Omega = 2\Theta$ ein in geringem Abstand vom vorderen Fahrzeugende beginnender, bis in große Entfernung, d.h. ins "Unendliche" reichender Bereich der Fahrbahn 12 erfaßbar ist.

Die Videokamera 11 ist bei dem zur Erläuterung gewählten speziellen Anordnungsbeispiel in der Nähe der rechten oberen Ecke der Frontscheibe 13 des Fahrzeuges 10 außerhalb der Fahrgastzelle 14 dort angeordnet, wo der die rechte aufsteigende Begrenzung der Frontscheibe 13 bildende Teil des rechten, oberen, tragenden Längsholmes 16 an den rechten vorderen Eckbereich des Fahrzeugdaches 17 anschließt. Der vertikale Abstand h der Videokamera 11 von der Fahrbahn 12 entspricht somit etwa der Fahrzeughöhe. Die Videokamera ist so am Fahrzeug 10 montiert, daß die optische Achse 18 des Kameraobjektivs 19 zur Ebene der Fahrbahn 12 unter einem spitzen Winkel ε geneigt und in einer vertikalen Ebene 21 (Fig. 2) verläuft, die sich parallel zur vertikalen Längsmittelebene 22 des Fahrzeugs 10 erstreckt.

Eine zweckmäßige Orientierung der Videokamera 11 kann auch darin bestehen, daß, wie gestrichelt angedeutet, die durch den geneigten Verlauf der optischen Achse 18 des Objektivs 19 markierte vertikale Ebene 21 mit der zentralen Längsmittelebene 22 des Fahrzeuges 10 einen kleinen spitzen Winkel δ von nur wenigen Winkelgraden einschließt, um die Grenze des mittels der Videokamera 11 erfaßbaren Nahbereiches derjenigen Fahrbahnseite, auf der der Gegenverkehr rollt, näher an das Fahrzeug 10 heranzurücken. Eine derartige "schräge" Orientierung der Kammern ist natürlich nicht zwingend und auch nicht vorgesehen, wenn diese in Fahrzeugmitte angeordnet ist, z.B. vor dem am oberen Frontscheibenrand angeordneten Innenspiegel des Fahrzeuges, in dessen Halterung eine moderne, mit kleinen Abmessungen realisierte Videokamera sogar integriert sein kann.

Desweiteren ist die Kamera 11 so am Fahrzeug 10 montiert, daß die Neigung ε der optischen Achse 18 des Kameraobjektivs 19 um einige Winkelgrade, z.B. 2 bis 5° kleiner ist als der von der optischen Achse 18 des Objektivs 19 aus gemessene Öffnungswinkel Θ, so daß die Videokamera 11 zumindest ab einer Mindestdistanz vom Fahrzeug 10 vor diesem befindliche Fahrzeuge, auch wenn diese höher sind als das Fahrzeug 10 selbst, in voller Höhe erfassen kann.

Um bei der genannten Orientierung der optischen Achse 18 des Kameraobjektivs 19 die Grenze des mittels der Kamera 11 erfaßbaren Fahrbahnbereiches möglichst nahe an das Fahrzeug 10 heranzurücken, ist das Kameraobjektiv 19 als Weitwinkelobjektiv ausgebildet, für dessen Bildwinkel 2Θ zum Zweck der Erläuterung ein Wert um 60° vorausgesetzt sei, so daß bei einer Fahrzeughöhe von etwa 2 m und einem Neigungswinkel ε der optischen Achse 18 von etwa 28° der mittels der Kamera 11 erfaßbare Fahrbahnbereich unter Berücksichtigung der durch die Kamera 11 vermittelten Formatbegrenzung in einem Abstand von der Kamera 11 beginnt, der etwa 4 m beträgt und sich im übrigen, innerhalb des Bildwinkels 2Θ bis zum - "hochliegenden" - Landschaftshorizont erstreckt.

Für die nunmehr folgende Erläuterung weiterer baulicher Einzelheiten und funktioneller Eigenschaften der Videokamera 11 sei, der Einfachheit halber, vorausgesetzt, daß die geometrisch-optischen Eigenschaften des Objektivs 19 durch eine Abbildungsgleichung der vereinfachten Form:

$$1/g + 1/b = 1/f \qquad (1)$$

beschreibbar sind, in der gemäß Fig. 3 mit f die Brennweite des durch eine einzige Ebene, die sogenannte Hauptebene 23, repräsentierten Objektivs 19, mit g die Gegenstandsweite, definiert als Abstand eines mittels des Objektivs 19 erfaßbaren Gegenstandspunktes $G_{01}$ von der Hauptebene 23 des Objektivs 19 und mit b die Bildweite, definiert als Abstand des vom Objektiv entworfenen, mit dem Gegenstandspunkt konjugierten Bildpunktes $B_{01}$ von der Hauptebene 23, bezeichnet sind, wobei die Brennweite f den von der Hauptebene 23 des Objektivs aus entlang der optischen Achse 18 gemessenen Abstand des Brennpunktes F angibt, durch den alle von den abbildbaren Gegenständen ausgehende Lichtstrahlen 24 verlaufen, die parallel zur optischen Achse 18 des Objektivs 19 auf dessen Hauptebene 25 auftreffen.

Unter diesen Voraussetzungen ergibt sich, daß die Bildpunkte $B_{on}$ derjenigen Punkte $G_{on}$ des Gegenstandsraumes, die gemäß der Darstellung der Fig. 3 oberhalb der optischen Achse 18 des Objektivs 19 liegen, entlang dieser gesehen, in den unterhalb der optischen Achse 18 liegenden Bereich des jeweils maßgeblichen Bildkreises fallen. Da bei der für die Videokamera 11 vorgesehenen, in der Fig. 3 gestrichelt dargestellten, geneigten Anordnung am Fahrzeug 10 praktisch der gesamte, für die Beobachtung wesentliche Gegenstandsraum im vorgenannten Sinne oberhalb der optischen Achse 18 des Objektivs 19 angeordnet ist, ist demgemäß, entsprechend der schematisch vereinfachten Darstellung der Fig. 4 die lichtempfindliche CCD-Sensorplatte 26, deren objektivseitige Sensorfläche 27 eine ausgewählte, rechtwinklig zur optischen Achse 18 des Objektivs 19 verlaufende Bildebene 28 markiert und durch ihre Abmessungen innerhalb des in dieser Bildebene 28 liegenden Bildkreises 29 (Fig. 5) das Format des auswertbaren Gesamtbildes definiert, so weit nach unten versetzt, daß der überwiegende Teil des Bildformats, für den für die Bildauswertung interessanten Bereich ausgenutzt ist.

Als Folge der Schrägstellung der Videokamera 11 bezüglich der Fahrbahn 12 werden deren vom Fahrzeug 10 weiter entfernte Abschnitte auf radial äußere, d.h. tiefer gelegene Bereiche der Sensorfläche 27 abgebildet als dem Fahrzeug 10 näher celeaene Teile der Fahrbahn. Die Folge hiervon ist, daß die ferner gelegenen Bereiche der Fahrbahn 12 mit einem größeren Abbildungsmaßstab abgebildet werden als die näher gelegenen Bereiche, die auf den der optischen Achse 18 des Objektivs nahen Bereich der Sensorplatte 26 abgebildet werden. Verglichen mit einer horizontalem Verlauf der optischen Achse 18 entsprechenden Anordnung der Videokamera 11 ist der Abbildungsmaßstab bei geneigtem Verlauf der optischen Achse 18, betrachtet in der durch die Abbildungsgleichung (1) bedingten Näherung, um einen Maßstabsfaktor M größer, der durch die Beziehung

$$M = \frac{1 + \tan^2 \varepsilon}{1 - \tan \varepsilon \tan \vartheta} \qquad (2)$$

gegeben ist, in der mit $\varepsilon$ der Neigungswinkel der optischen Achse 18 der Videokamera 11 bezeichnet ist und mit $\vartheta$ der halbe Bildwinkel, unter dem bei horizontal orientierter optischer Achse 18 und vorgegebener Gegenstandsseite g ein in der Fig. 3 durch einen Doppelpfeil 31 repräsentiertes Objekt mit beidseits der optischen Achse gleicher Ausdehnung erscheinen würde.

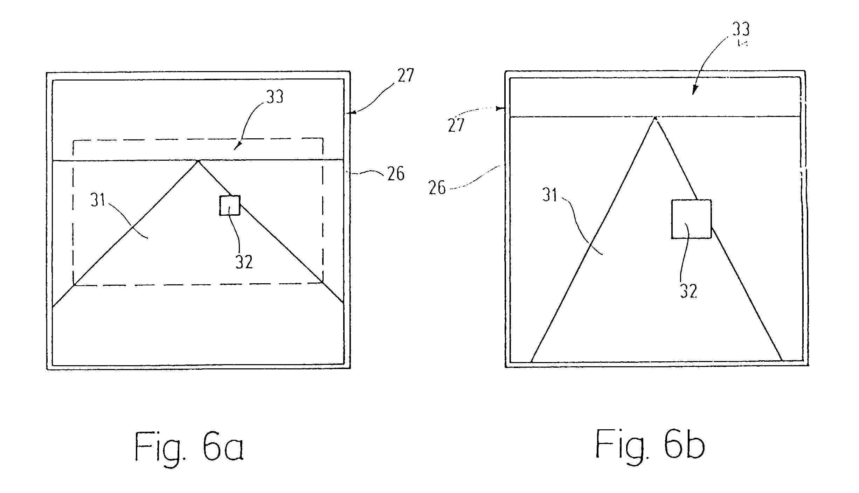

Zu einer qualitativen Veranschaulichung der Wirkung der erfindungsgemäßen Anordnung sei abschließend auf die Fig. 6a und b bezug genommen, in denen jeweils der mittels der Sensorplatte 26 der Videokamera 11 erfaßbare Bereich einer in einer Ebene verlaufenden geraden Straße 31, auf der sich in noch großer Entfernung ein Hindernis 32 befindet, dargestellt ist, wobei die Fig. 6a dem Fall entspricht, daß die Videokamera 11 mit einem Normalobjektiv bestückt ist und die Fig. 6b dem Fall, daß die Videokamera 11 mit einem Weitwinkelobjektiv bestückt ist und in der anhand der Fig. 1, 3 und 4 geschilderten Anordnung benutzt wird. Das Bild gemäß Fig. 6b, zu dessen Auswertung die gesamte Sensorfläche 27 der Sensorplatte 26 ausnutzbar ist, entspricht dann einer vergrößerten Darstellung des in der Fig. 6a gestrichelt berandeten Bildausschnitts 33, wobei die sich ergebende Verzerrung "in Längsrichtung der Straße" für die elektronische Bildauswertung unerheblich ist. Die relativ starke Vergrößerung weit entfernter Objekte, z.B. des Hindernisses 32 ist vorteilhaft, um z.B. ein Stauende frühzeitig erkennen zu können.

## Patentansprüche

1. Einrichtung zur optischen Erfassung des Fahrbahnverlaufs und des Verkehrsgeschehens vor einem Straßenfahrzeug durch elektronische Verarbeitung und Auswertunc der Bildsignale einer Videokamera, die in einem hochgelegenen Teil des Fahrzeuges angeordnet ist, z.B. in Höhe des oberen Randes der Frontscheibe des Fahrzeuges, wobei der Neigungswinkel $\varepsilon$, den die optische Achse des Kamera-Objektivs mit der Ebene der Fahrbahn einschließt, kleiner als die Hälfte des Gesamtöffnungswinkels (2$\Theta$) des Objektivs ist, jedoch annähernd dessen halbem Wert ($\Theta$) entspricht, **dadurch gekennzeichnet,** daß das Objektiv (19) der Videokamera (11) als Weitwinkelobjektiv mit einem Öffnungswinkel (2$\Theta$) und mindestens 90° ausgebildet ist, und daß die lichtempfindliche Sensorfläche (27) der Videokamera (11) auf denjenigen Teil des Bildbereiches (28) beschränkt ist, dem im Gegenstandsraum der Abstandsbereich ab einer Mindestentfernung von der Kamera (11) bis zu den weitest entfernten Bereichen des Gegenstandsraumes entspricht.

2. Anordnung nach Anspruch 1, **dadurch gekennzeichnet,** daß die horizontale Mindestentfernung vom Kameraobjektiv (19), ab welcher dieses das Bild des Gegenstandsraumes auf der lichtempfindlichen Fläche (27) der Kamera entwirft, einem Wert entspricht, der gleich oder annähernd gleich dem Wert h/tanε ist, wobei mit h der vertikale Abstand des Zentrums des Objektivs (19) von der Fahrbahn (12) bezeichnet ist und mit ε der Neigungswinkel, den die optische Achse (18) des Objektivs (19) mit der Fahrbahn (12) einschließt.

## Claims

1. An apparatus for visually ascertaining the carriageway pattern and traffic happenings ahead of a roadgoing vehicle by electronic processing and evaluation of the image signals from a video camera disposed in an elevated position in a vehicle, e.g. at the height of the top edge of the windscreen of the vehicle, whereby the angle of inclination ε which includes the optical axis of the camera lens and the plane of the carriageway, is smaller than half the total opening angle (2θ) of the lens, but corresponds to approximately half its value (θ), characterised in that the lens (19) of the video camera (11) is constructed as a wide-angle lens with an opening angle (2θ) and at least 90 °, and in that the light-sensitive sensor surface (27) of the video camera (11) is limited to that part of the image area (28) to which corresponds, in the object space, the distance range from a minimum remoteness from the camera (11) as far as the farthest removed areas of the object space.

2. An arrangement according to Claim 1, characterised in that the horizontal minimum remoteness from the camera lens (19) with effect from which this directs the image of the object space onto the light-sensitive surface (27) of the camera, corresponds to a value which is equal to or approximately equal to the value h/tanε, h being the vertical distance from the centre of the lens (19) to the carriageway (11) while ε represents the angle of inclination which encloses the optical axis (18) of the objective lens (19) to the carriageway (12).

## Revendications

1. Dispositif de détection optique du déroulement de la chaussée et de la circulation devant un véhicule routier, par traitement électronique et exploitation des signaux d'image d'une caméra vidéo qui est disposée dans une partie en haut du véhicule, c'est-à-dire, par exemple à la hauteur du bord supérieur du pare-brise du véhicule, où l'angle d'inclinaison ε, englobé par l'axe optique de l'objectif de la caméra avec le plan de la chaussée, est plus petit que la moitié de l'angle d'ouverture totale (2θ) de l'objectif, mais qui correspond presque à la moitié de la valeur (θ) de cet angle d'ouverture,

caractérisé en ce que l'objectif (19) de la caméra vidéo (11) est constitué comme un objectif grand angle ayant un angle d'ouverture (2θ), au moins de 90°, et en ce que la surface photosensible (27) du capteur de la caméra vidéo (11) est limitée à la partie de la zone (28) de l'image, à laquelle correspond, dans l'espace de l'objet, la zone de distance à partir d'une distance minimum par rapport à la caméra (11) jusqu'aux zones les plus éloignées de l'espace de l'objet.

2. Disposition selon la revendication 1, caractérisée en ce que la distance minimum horizontale par rapport à l'objectif (19) de la caméra, à partir de laquelle ledit objectif projette l'image de l'espace de l'objet sur la surface photosensible (27) de la caméra, correspond à une valeur qui est égale ou presque égale à la valeur h/tanε, où *h* désigne la distance verticale du centre de l'objectif (19) par rapport à la chaussée (12) et où ε désigne l'angle d'inclinaison englobé par l'axe optique (18) de l'objectif (19) avec la chaussée (12).

Fig. 2

Fig. 4

Fig. 5

Fig. 1

EP 0 802 468 B1

Fig. 3

EP 0 802 468 B1

Fig. 6a

Fig. 6b

EP 0 802 468 B1